# FASCICULE DE BREVET EUROPEEN

(11) **EP 1 253 051 B1**
(45) Date de publication et mention de la délivrance du brevet: **22.09.2010**
(21) Numéro de dépôt: 02291063.2
(22) Date de dépôt: 26.04.2002
(51) Int. Cl.: B60R 21/09, B60T 7/06

(54) **Système de désengagement d'une pédale de frein en cas de collision**
Lösesystem für Bremspedal bei Unfällen
System to disengage the brake pedal in case of collision

(30) Priorité: 27.04.2001 FR 0105769
(43) Date de publication de la demande: 30.10.2002
(73) Titulaire: Thyssenkrupp Sofedit, 61260 Le Theil (FR)
(72) Inventeur: Hauguel, Fabrice, 95250 Beauchamp (FR)
(74) Mandataire: Texier, Christian

(56) Documents cités:
- EP-A- 0 965 506
- EP-A- 1 065 114
- WO-A-01/03976
- DE-A- 19 919 451
- GB-A- 2 322 836

## Description

L'invention concerne un procédé pour commander un déplacement de la pédale d'un dispositif de commande d'un système de freinage ou de débrayage d'un véhicule automobile actionné par une tige reliée à la pédale par une liaison, en sorte qu'en cas de choc frontal du véhicule, la pédale soit déplacée dans le sens de sa mise au plancher, indépendamment de ladite liaison.

Le document EP 1065114 divulgue un procédé comprenant un verrou, où l'axe de pivotement de la tige d'actionnement reste fixé à la pédale, sans mouvement relatif possible.

Selon l'invention, au moins dans une première phase de la période consécutive au choc, on obtient ce déplacement par un pivotement d'un basculeur auquel est fixé la pédale et dont le pivotement est empêché avant le choc par un verrou, en utilisant l'effet du choc pour provoquer la suppression de ce verrou.

Dans des modes de réalisation préférés, le procédé de l'invention présente également une ou plusieurs des caractéristiques suivantes :
- on utilise l'effet du choc pour sectionner le verrou par contact avec une butée.
- on utilise l'effet du choc pour supprimer le verrou par un effet pyrotechnique.
- on utilise une commande du fonctionnement de coussins anti-chocs pour commander ledit effet pyrotechnique.
- on utilise un autre effet pyrotechnique pour terminer la mise au plancher de la pédale dans une deuxième phase de la période consécutive au choc.
- on utilise ledit autre effet pyrotechnique pour supprimer ou déplacer l'axe de rotation de la pédale.

L'invention concerne également un dispositif de commande au moyen d'une pédale montée à rotation, d'une tige d'actionnement d'un système de freinage ou de débrayage d'un véhicule automobile.

Selon l'invention, ce dispositif est caractérisé en ce qu'il comprend au moins un basculeur articulé à la pédale en sorte que son basculement provoque un déplacement de la pédale dans le sens de sa mise au plancher, en ce qu'il comprend un verrou qui bloque ce basculement, et en ce qu'il comprend des moyens pour éliminer ce verrou en conséquence d'une décélération brutale du véhicule sous l'effet d'un impact frontal.

Dans des modes de réalisation préférés, le dispositif de l'invention présente également une ou plusieurs des caractéristiques suivantes :
- la pédale pivote autour d'un axe sur un support et la tige de commande est reliée à la pédale par l'intermédiaire du basculeur, lequel est relié à la tige de commande par un axe d'articulation et est relié à la pédale par un axe d'articulation et par ledit verrou.
- les positions respectives du verrou, de l'axe d'articulation du basculeur à la pédale et de l'axe d'articulation du basculeur à la tige de poussée sont telles qu'après rupture du verrou la ligne d'effort qui suit la tige passe sous l'axe d'articulation du basculeur à la pédale lorsque le basculeur est mis en rotation.
- le dispositif comprend un ressort pour initialiser le pivotement du basculeur après la rupture du verrou.
- le verrou est un organe sectionnable dont le sectionnement provoque le déverrouillage.
- le dispositif comprend une butée disposée en sorte que ladite décélération amène le basculeur au contact de la butée, laquelle initie un basculement du basculeur qui sectionne le verrou après quoi le basculement du basculeur entraîne une rotation de la pédale dans le sens de la mise au plancher.
- le dispositif comprend des moyens pour limiter la rotation du basculeur après rupture du verrou afin de maintenir une possibilité de freinage.
- ledit verrou est escamotable par un effet pyrotechnique.
- le dispositif équipe un véhicule muni de coussins de sécurité commandés par un moyen sensible à la décélération brutale du véhicule qui commande également ledit effet pyrotechnique.
- le basculeur est fixé à pivotement sur un support, lequel porte la pédale par l'intermédiaire du basculeur et ledit verrou bloque le basculeur sur le support.
- l'escamotage dudit verrou permet dans une première phase la rotation du basculeur jusqu'à une position où la pédale peut encore commander une possibilité de freinage et dans lequel des moyens sont prévus pour agir dans une deuxième phase sur l'axe de rotation de la pédale afin de permettre une mise au plancher de la pédale.
- le dispositif comprend deux basculeurs commandés par des verrous respectifs, à savoir un premier basculeur monté à pivotement sur un support et bloqué sur ce support par un premier verrou, ladite pédale étant montée à pivotement sur ce premier basculeur, et un deuxième basculeur monté à pivotement sur la pédale et auquel est articulée la tige de commande, le deuxième basculeur étant bloqué sur la pédale par un deuxième verrou, et des moyens pour éliminer successivement les verrous par des effets pyrotechniques distincts.
- le dispositif comprend des moyens pour freiner le ou lesdits basculements du ou des basculeurs.
- une zone d'affaiblissement est pratiquée autour de l'axe de rotation de la pédale sur le support de la pédale en amont de cet axe par rapport au sens de l'impact, en sorte que cet axe puisse se déplacer dans ladite zone afin de terminer la mise au plancher de la pédale.

On décrira ci-après des exemples de dispositifs conformes à l'invention, en référence aux figures du dessin joint sur lequel :
- la figure 1 est une vue latérale simplifiée d'une première réalisation d'un dispositif à basculeur selon l'invention, avant le choc.
- les figures 2 à 5 sont des vues analogues à deux instants successifs de la mise au plancher de la pédale,
- les figures 6 et 7 sont des vues schématiques d'une deuxième réalisation d'un dispositif à basculeur selon l'invention, respectivement avant et après le choc,
- les figures 8 et 9 sont des vues simplifiées de cette deuxième réalisation selon deux sens de vue opposés, respectivement avant le choc (figures 8A et 9A) et après le choc (figs. 8B et 9B),
- la figure 10 est un schéma d'un verrou pyrotechnique,
- la figure 11 est une vue simplifiée d'une réalisation d'un dispositif à deux basculeurs combinés selon l'invention.

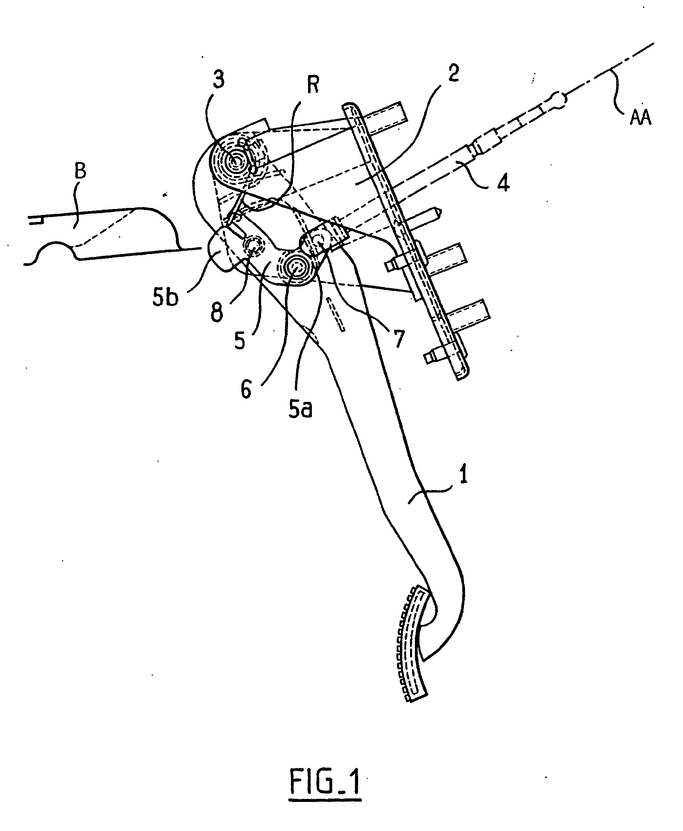

Le dispositif représenté sur la figure 1 comprend une pédale (1) montée à rotation au moyen d'un axe (3) sur une chape (2) fixée dans la structure d'une automobile de façon connue ne soi.

Cette pédale est destinée à actionner une tige (4), par exemple une tige de commande du système de frein de l'automobile.

Selon l'invention, cette tige est articulée à la pédale par l'intermédiaire d'un basculeur (5).

Dans la réalisation représentée, le basculeur a une conformation en équerre et présente une branche (5a) qui est articulée sur la pédale (1) au moyen d'un axe de pivotement (6) et sur la tige (4) au moyen d'un axe de pivotement (7). L'autre branche (5b) du basculeur est fixée à la pédale au moyen d'un verrou (8) qui empêche un mouvement relatif du basculeur et de la pédale.

Les axes de pivotement (3), (6) et (7) sont parallèles.

Dans cette configuration, la ligne d'action AA de la tige (4) passe au-dessus de l'axe (6).

Le verrou (8) est par exemple un rivet sectionnable dont le sectionnement doit se produire en cas de choc frontal (flèche F).

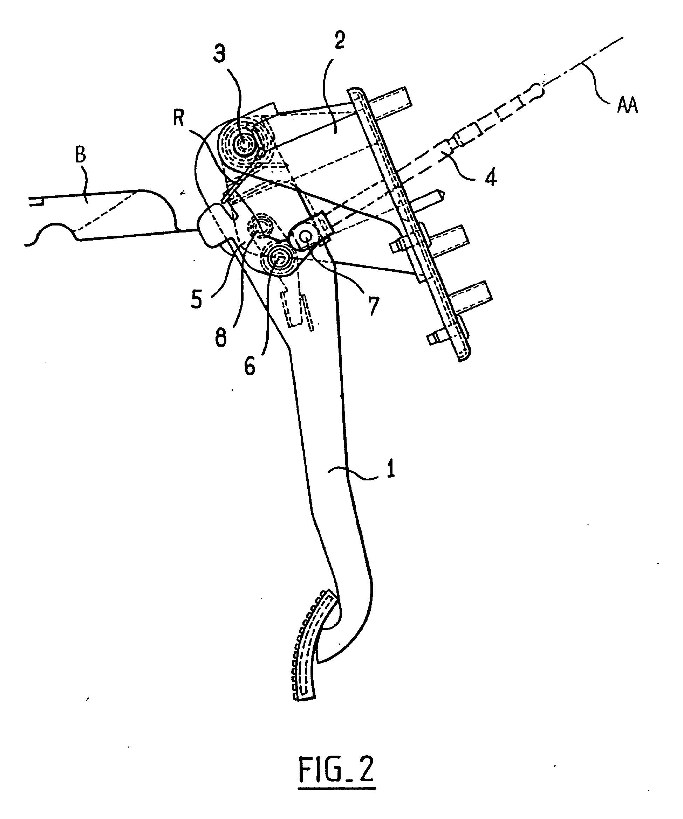

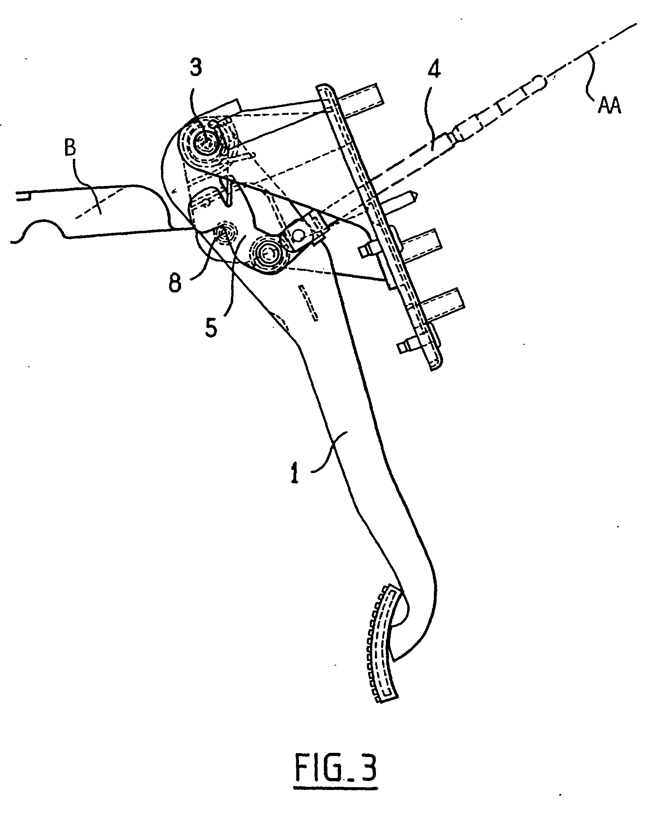

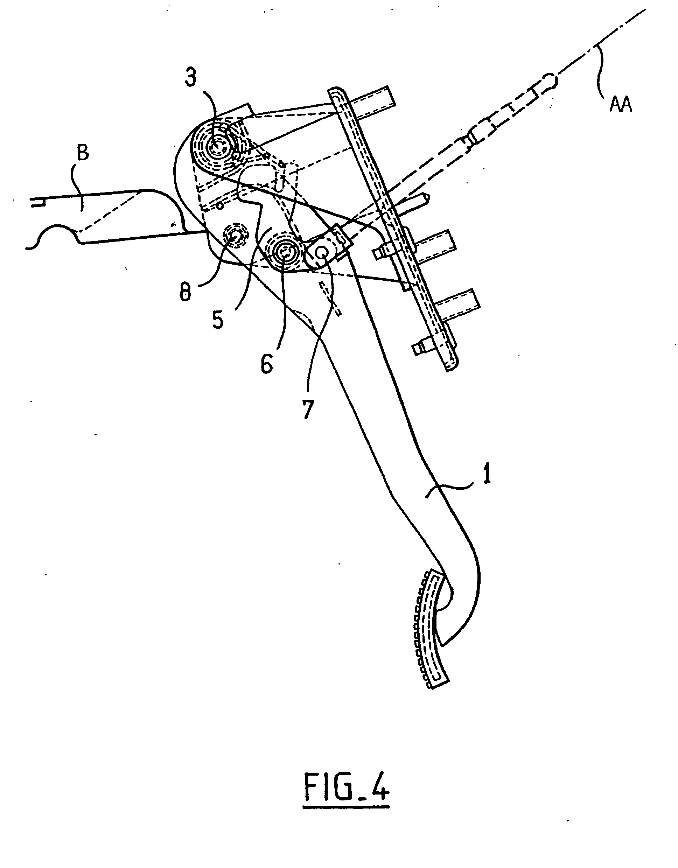

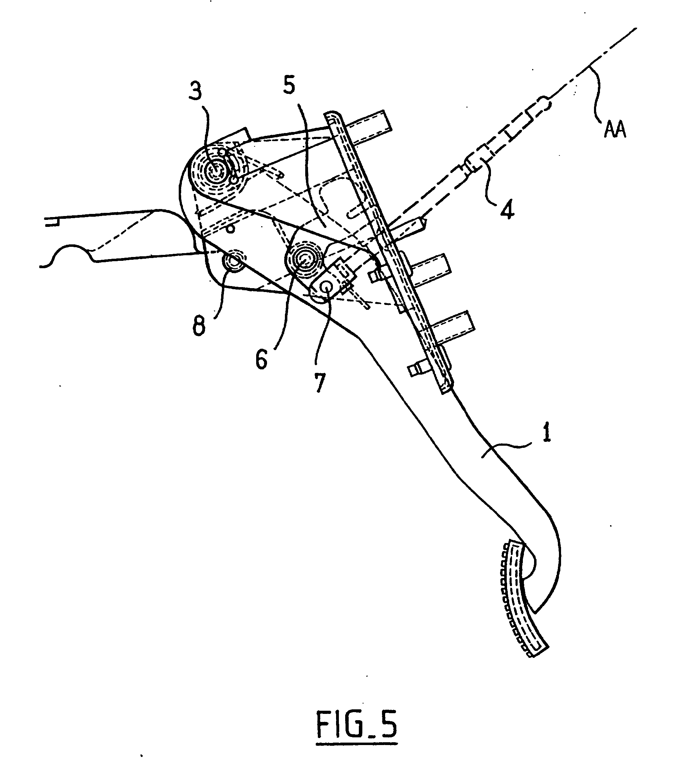

Dans l'exemple représenté, on obtient ce sectionnement par l'action d'une butée B qui sous l'effet du choc vient au contact du basculeur et le pousse à basculer, ce qui provoque le sectionnement du rivet, après quoi le basculeur pivote sur la pédale autour de l'axe (6), en sorte que la ligne d'action AA de la tige se déplace progressivement pour passer en-dessous de l'axe (6) (figures 2 à 5).

Avantageusement, un ressort R agit sur le basculement du basculeur.

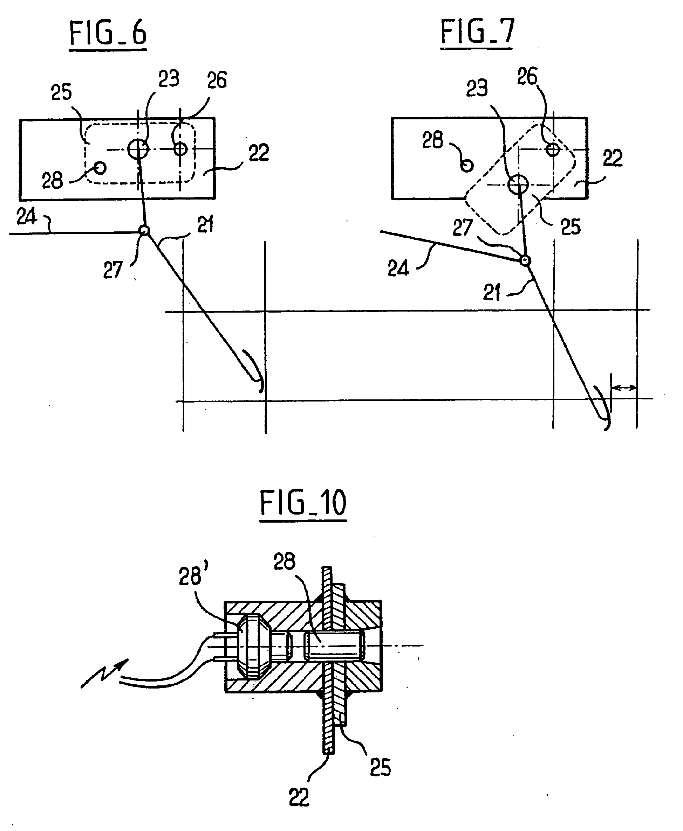

Les figures 6 et 7 sont relatives à une variante de réalisation dans laquelle la pédale (21) n'est pas articulée directement sur la chape (22) mais est montée à rotation autour d'un axe (23) sur un basculeur (25) lequel est articulé sur la chape autour d'un axe (26) et est bloqué sur la chape au moyen d'un verrou (28) tandis que la tige de commande est articulée sur la pédale au moyen d'un axe (27).

Le verrou (28) est par exemple un verrou pyrotechnique connu en soi quia été schématisé pour l'exemple sur la figure 10.

Le verrou passe en position de déverrouillage en étant chassé de son logement (28) par la pression d'un gaz libéré par un effet pyrotechnique commandé par un allumeur électrique (28') qui fonctionne en conséquence d'un signal électrique engendré par le choc.

Après déverrouillage, le basculeur entre en rotation naturellement en utilisant l'accélération communiquée par le choc à la pédale ; un ressort de torsion précontraint peut être ajouté au dispositif afin de communiquer une accélération supplémentaire au basculeur.

Le mouvement de rotation du basculeur impose à l'axe de pédale de reculer dans le véhicule (figure 7). Ce mouvement de l'axe pédale combiné au fait que la pédale soit liée à la tige de liaison pédale permet à celle-ci de pivoter. En fin de choc, l'intrusion de la pédale dans l'habitacle se trouve ainsi limitée.

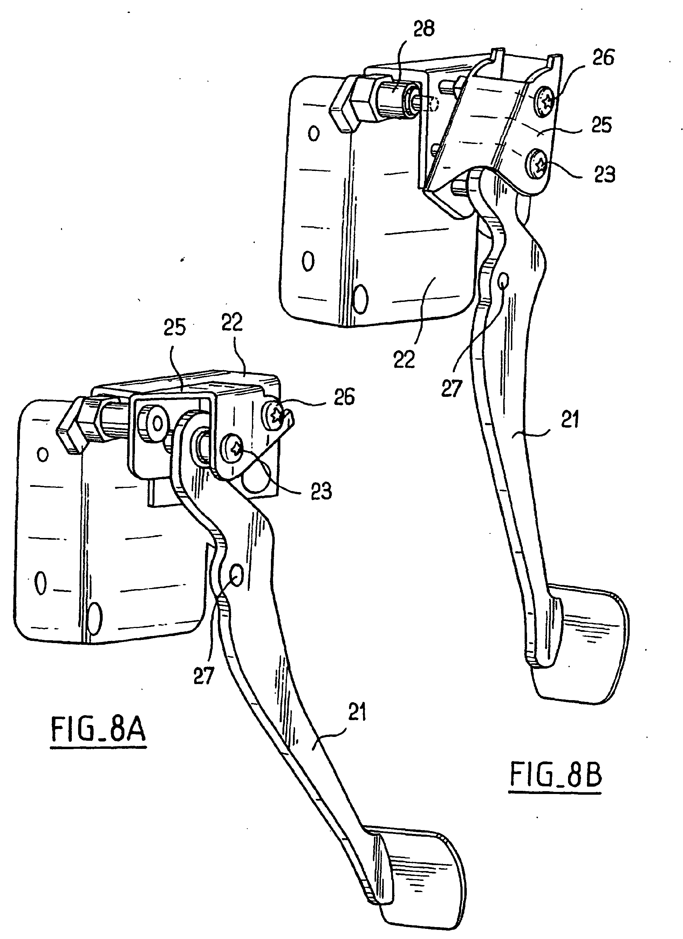

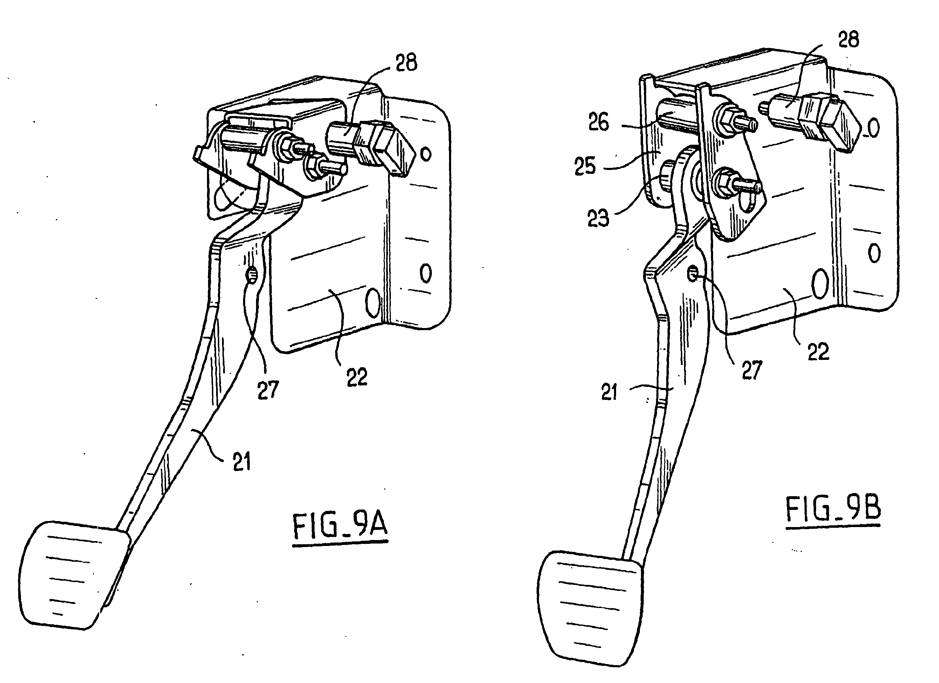

Sur les figures 8A et 8B on a représenté le dispositif des figures 6 et 7, respectivement avant et après déverouillage, et sur les figures 9A et 9B on a représenté le dispositif vu en sens opposé.

L'invention prévoit également de combiner les deux types de basculeur pour obtenir deux effets successifs sur la pédale.

Dans ce cas, il est préconisé d'utiliser deux verrous pyrotechniques, le premier commandant un début de mise au plancher de la pédale et le deuxième commandant une mise au plancher accomplie.

La première mise au plancher est commandée par exemple simultanément au déclenchement automatique des coussins gonflables de sécurité et la deuxième mise au plancher est commandée indépendamment.

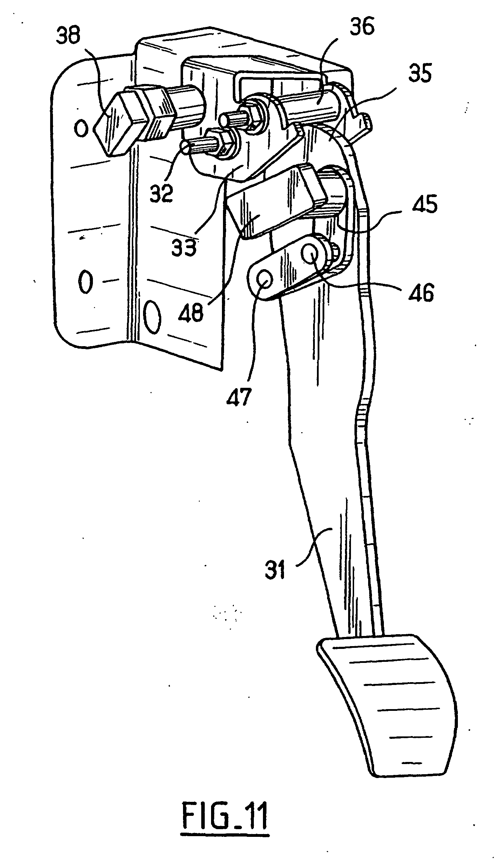

Sur la figure 11 on a représenté pour l'exemple un tel dispositif combiné dans lequel la pédale (31) est à pivotement autour d'un axe (33) sur un basculeur (35) lui-même monté à bascule autour d'un axe (36) sur une chape (32), et bloqué sur la chape par un verrou pyrotechnique (38) et dans lequel un deuxième basculeur (45), articulé par un axe (47) à la tige de commande (non représentée) du système de freinage est articulée à la pédale par un axe (46) et bloqué sur la pédale par un verrou pyrotechnique (48).

La première action de mise au plancher est obtenue par exemple dans un délai de 10 à 20 millisecondes après le choc et libère le verrou (47), tandis que la deuxième action agit sur le verrou (37) et termine la mise au plancher de la pédale.

L'invention n'est pas limitée aux modes de réalisation qui ont été décrits.

## Revendications

1. Dispositif de commande au moyen d'une pédale (1 ; 31) montée à pivotement, d'une tige d'actionnement (4) d'un système de freinage ou de débrayage d'un véhicule automobile, comprenant au moins un basculeur (5) articulé à la pédale en sorte que son pivotement provoque un déplacement de la pédale dans le sens de sa mise au plancher, comprenant également un verrou (8) qui bloque ce pivotement, et des moyens (B ; 28') pour supprimer ce verrou en conséquence d'une décélération brutale du véhicule sous l'effet d'un impact frontal, **caractérisé en ce que** la tige de commande (4) est reliée à la pédale par l'intermédiaire du basculeur (5), lequel est relié à la tige d'actionnement par un axe d'articulation (7) et est relié à la pédale par un autre axe d'articulation (6) et par ledit verrou (8).

2. Dispositif selon la revendication précédente, **caractérisé en ce que** les positions respectives du verrou, de l'axe d'articulation (6) du basculeur à la pédale et de l'axe d'articulation (7) du basculeur à la tige d'actionnement sont telles qu'après suppression du verrou, la ligne d'effort (AA) qui suit la tige d'actionnement passe sous l'axe d'articulation (6) du basculeur à la pédale lorsque le basculeur est mis en pivotement.

3. Dispositif selon l'une des revendications précédentes **caractérisé en ce qu'**il comprend un ressort (R) pour agir sur le pivotement du basculeur (5) après la suppression du verrou (8).

4. Dispositif selon l'une des revendications précédentes **caractérisé en ce que** le verrou est supprimable par un effet mécanique.

5. Dispositif selon la revendication 4 **caractérisé en ce que** le verrou (8) est réalisé avec un élément sectionnable dont le sectionnement provoque la suppression du verrou.

6. Dispositif selon l'une des revendications 4 et 5 **caractérisé en ce qu'**il comprend une butée (B) disposée en sorte que ladite décélération amène le verrou (8) au contact du basculeur (5), et **en ce que** ce contact provoque d'abord le sectionnement du verrou puis un pivotement du basculeur qui entraîne un pivotement de la pédale (1 ; 31) dans le sens de la mise au plancher.

7. Dispositif selon l'une des revendications 1 à 3, **caractérisé en ce que** le verrou est supprimable par un effet pyrotechnique.

8. Dispositif selon la revendication précédente équipant un véhicule muni de coussins gonflables de sécurité commandés par un moyen sensible à la décélération brutale du véhicule, **caractérisé en ce que** ledit moyen commande également ledit effet pyrotechnique.

9. Dispositif selon l'une des revendications précédentes **caractérisé en ce qu'**il comprend des moyens pour limiter le pivotement du basculeur après suppression du verrou afin de maintenir une possibilité de freinage.

10. Dispositif selon l'une des revendications précédentes **caractérisé en ce qu'**une zone d'affaiblissement est pratiquée autour de l'axe de pivotement de la pédale sur le support de la pédale en amont de cet axe par rapport au sens de l'impact, en sorte que cet axe puisse se déplacer dans ladite zone afin de terminer la mise au plancher de la pédale.

11. Dispositif selon l'une des revendications précédentes **caractérisé en ce que** la suppression du verrou permet, dans une première phase, le pivotement du basculeur jusqu'à une position où la pédale peut encore commander une possibilité de freinage, et **en ce que** des moyens sont prévus pour agir dans une deuxième phase sur l'axe de rotation de la pédale afin de permettre une mise au plancher de la pédale.

12. Dispositif selon l'une des revendications 7 à 11, **caractérisé en ce qu'**il comprend un deuxième basculeur (35) agencé avec un deuxième verrou (38), le deuxième basculeur (35) étant monté à pivotement sur un support et bloqué sur ce support par le deuxième verrou (38), ladite pédale (31) étant montée à pivotement sur ce deuxième basculeur (35), le dispositif comprenant des moyens pour supprimer successivement les verrous (8 ; 48) par des effets pyrotechniques distincts.

13. Dispositif selon l'une des revendications 1 à 11, **caractérisé que** en ce que la pédale pivote autour d'un axe (3) sur un support (2).

14. Dispositif selon l'une des revendications précédentes **caractérisé en ce qu'**il comprend des moyens pour freiner le ou lesdits pivotements du ou des basculeurs.

## Claims

1. A device for controlling by means of pivotally mounted pedal (1; 31) a rod (4) for actuating a braking or clutch-disengagement system of a motor vehicle, comprising at least one rocker arm (5) jointed with the pedal so that its pivoting causing displacement of the pedal in the direction of its being floored, also comprising a lock (8) which blocks this pivoting, and means (B; 28') for suppressing this lock as a consequence to sudden deceleration of the vehicle under the effect of a front impact, **characterized in that** the control rod (4) is connected to the pedal via the rocker arm (5), which is connected to the actuating rod through a joint axis (7) and is connected to the pedal through another joint axis (6) and through said lock (8).

2. The device according to the preceding claim, **characterized in that** the respective positions of the lock, of the joint axis (6) of the rocker arm with the pedal and of the joint axis (7) of the rocker arm with the actuating rod are such that after suppressing the lock, the line of force (AA) which follows the actuating rod passes under the joint axis (6) of the rocker arm with the pedal when the rocker arm starts pivoting.

3. The device according to any of the preceding claims, **characterized in that** it comprises a spring R in order to act on the pivoting of the rocker arm (5) after suppression of the lock (8).

4. The device according to any of the preceding claims, **characterized in that** the lock may be suppressed by a mechanical effect.

5. The device according to claim 4, **characterized in that** the lock (8) is made with a severable element, the severance of which causes suppression of the lock.

6. The device according to any of claims 4 and 5, **characterized in that** it comprises an abutment (B) positioned so that deceleration brings the lock (8) into contact with the rocker arm (5) and **in that** this contact then causes severance of the lock and then pivoting of the rocker arm which causes pivoting of the pedal (1; 31) in the direction of its being floored.

7. The device according to any of claims 1 to 3, **characterized in that** the lock may be suppressed by a pyrotechnic effect.

8. The device according to the preceding claim, fitting out a vehicle provided with inflatable safety bags controlled by a means sensitive to sudden deceleration of the vehicle, **characterized in that** said means also controls said pyrotechnic effect.

9. The device according to any of the preceding claims, **characterized in that** it comprises means for limiting pivoting of the rocker arm after suppression of the lock in order to maintain a braking possibility.

10. The device according to any of the preceding claims, **characterized in that** a weakening area is made around the pivot axis of the pedal on the support of the pedal upstream from this axis relatively to the direction of the impact, so that this axis may move in said area in order to finish flooring of the pedal.

11. The device according to any of the preceding claims, **characterized in that** by suppressing the lock, it is possible in a first phase, to pivot the rocker arm up to a position where the pedal may further control a braking possibility, and **in that** means are provided for acting in a second phase on the axis of rotation of the pedal so that the pedal may be floored.

12. The device according to any of claims 7 to 11, **characterized in that** it comprises a second rocker arm (35) arranged with a second lock (38), the second rocker arm (35) being pivotally mounted on a support and locked on this support by the second lock (38), said pedal (31) being pivotally mounted on this second rocker arm (35), the device comprising means for successively suppressing the locks (8; 48) by distinct pyrotechnic effects.

13. The device according to any of claims 1 to 11, **characterized in that** the pedal pivots around an axis (3) on a support (2).

14. The device according to any of the preceding claims, **characterized in that** it comprises means for slowing down said pivoting(s) of the rocker arm(s).

## Patentansprüche

1. Steuervorrichtung mittels eines schwenkbar montierten Pedals (1; 31), einer Betätigungsstange (4) eines Brems- oder Lösesystems eines Kraftfahrzeugs, die mindestens eine Wippe (5) umfasst, die derart am Pedal angelenkt ist, dass ihr Schwenken eine Verschiebung des Pedals in Richtung Bodenstellung bewirkt, die ebenfalls einen Riegel (8) umfasst, der dieses Schwenken blockiert, und Mittel (B; 28'), um diesen Riegel infolge einer heftigen Entschleunigung des Fahrzeugs unter Einwirkung eines frontalen Aufpralls zu neutralisieren, **dadurch gekennzeichnet, dass** die Steuerstange (4) mit dem Pedal über die Wippe (5) verbunden ist, die mit der Betätigungsstange durch eine Gelenkachse (7) verbunden ist und mit dem Pedal durch eine andere Gelenkachse (6) und durch den Riegel (8) verbunden ist.

2. Vorrichtung nach vorangehendem Anspruch, **dadurch gekennzeichnet, dass** die jeweiligen Stellungen des Riegels, der Gelenkachse (6) der Wippe am Pedal und der Gelenkachse (7) der Wippe an der Betätigungsstange derart sind, dass nach Neutralisierung des Riegels die Kraftlinie (AA), die der Betätigungsstange folgt, unter der Gelenkachse (6) der Wippe am Pedal verläuft, wenn die Wippe schwenkt.

3. Vorrichtung nach einem der vorangehenden Ansprüche, **dadurch gekennzeichnet, dass** sie eine Feder (R) umfasst, um auf das Schwenken der Wippe (5) nach der Neutralisierung des Riegels (8) einzuwirken.

4. Vorrichtung nach einem der vorangehenden Ansprüche, **dadurch gekennzeichnet, dass** der Riegel durch eine mechanische Wirkung neutralisierbar ist.

5. Vorrichtung nach Anspruch 4, **dadurch gekennzeichnet, dass** der Riegel (8) mit einem durchtrennbaren Element realisiert ist, dessen Durchtrennung die Neutralisierung des Riegels bewirkt.

6. Vorrichtung nach einem der Ansprüche 4 und 5, **dadurch gekennzeichnet, dass** sie einen Anschlag (B) umfasst, der derart angeordnet ist, dass die Entschleunigung den Riegel (8) mit der Wippe (5) in Kontakt bringt, und **dadurch**, dass dieser Kontakt zunächst die Durchtrennung des Riegels bewirkt und danach ein Schwenken der Wippe, was ein Schwenken des Pedals (1; 31) in Richtung Bodenstellung bewirkt.

7. Vorrichtung nach einem der Ansprüche 1 bis 3, **dadurch gekennzeichnet, dass** der Riegel durch eine pyrotechnische Kraft neutralisierbar ist.

8. Vorrichtung nach vorangehendem Anspruch, die ein mit aufblasbaren Sicherheitskissen ausgestattetes Fahrzeug ausrüstet, die durch ein Mittel gesteuert werden, das auf die heftige Entschleunigung des Fahrzeugs reagiert, **dadurch gekennzeichnet, dass** das Mittel auch die pyrotechnische Kraft steuert.

9. Vorrichtung nach einem der vorangehenden Ansprüche, **dadurch gekennzeichnet, dass** sie Mittel umfast, um das Schwenken der Wippe nach Neutralisierung des Riegels zu begrenzen, um eine Bremsmöglichkeit aufrechtzuerhalten.

10. Vorrichtung nach einem der vorangehenden Ansprüche, **dadurch gekennzeichnet, dass** um die Schwenkachse des Pedals auf dem Halter des Pedals vor dieser Achse im Verhältnis zur Richtung des Aufpralls eine Schwächungszone eingearbeitet ist, so dass sich diese Achse in dieser Zone verschieben kann, um die Bodenstellung des Pedals zu beenden.

11. Vorrichtung nach einem der vorangehenden Ansprüche, **dadurch gekennzeichnet, dass** die Neutralisierung des Riegels in einer ersten Phase das Schwenken der Wippe bis zu einer Stellung erlaubt, in der das Pedal noch eine Bremsmöglichkeit steuern kann, und **dadurch**, dass Mittel vorgesehen sind, um in einer zweiten Phase auf die Rotationsachse des Pedals einzuwirken, um eine Bodenstellung des Pedals zu erlauben.

12. Vorrichtung nach einem der Ansprüche 7 bis 11, **dadurch gekennzeichnet, dass** sie eine zweite Wippe (35) umfasst, die mit einem zweiten Riegel (38) ausgebildet ist, wobei die zweite Wippe (35) schwenkbar auf einem Halter montiert ist und auf diesem Halter von dem zweiten Riegel (38) blockiert wird, wobei das Pedal (31) schwenkbar auf dieser zweiten Wippe (35) montiert ist, wobei die Vorrichtung Mittel umfasst, um die Riegel (8, 48) nacheinander durch unterschiedliche pyrotechnische Kräfte zu neutralisieren.

13. Vorrichtung nach einem der Ansprüche 1 bis 11, **dadurch gekennzeichnet, dass** das Pedal um eine Achse (3) auf einem Halter (2) schwenkt.

14. Vorrichtung nach einem der vorangehenden Ansprüche, **dadurch gekennzeichnet, dass** sie Mittel umfasst, um die Schwenkbewegung(en) der Wippe(en) zu bremsen.
